# EUROPEAN PATENT SPECIFICATION

(11) **EP 3 976 283 B1**
(45) Date of publication and mention of the grant of the patent: **20.12.2023**
(21) Application number: 20758328.7
(22) Date of filing: 26.05.2020
(51) Int. Cl.: B08B 3/14, B01D 3/10, B01D 3/00, B01D 3/14

(54) **PROCESS AND SYSTEM FOR WASHING ITEMS RESULTING FROM AN INDUSTRIAL PRODUCTION BY USING SOLVENTS**
VERFAHREN UND SYSTEM ZUM WASCHEN VON GEGENSTÄNDEN AUS EINER INDUSTRIELLEN PRODUKTION UNTER VERWENDUNG VON LÖSUNGSMITTELN
PROCÉDÉ ET SYSTÈME DE LAVAGE D'ARTICLES RÉSULTANT D'UNE PRODUCTION INDUSTRIELLE À L'AIDE DE SOLVANTS

(30) Priority: 27.05.2019 IT 201900007257
(43) Date of publication of application: 06.04.2022
(73) Proprietor: Meg Srl, 36060 Romano d'Ezzelino (VI) (IT)
(72) Inventor: SAMA, Claudio, 36060 Romano d'Ezzelino (VI) (IT)
(74) Representative: Rocchetto, Elena
(86) International application number: PCT/IB2020/054970
(87) International publication number: WO 2020/240409

(56) References cited:
- CN-U- 207 681 091
- CN-Y- 201 061 793
- DE-A1-102016 000 300
- JP-A- H06 328 052

## Description

The present patent concerns the washing systems for industrial items, hereinafter simply referred to as industrial washing systems and/or industrial washing processes, and more specifically it concerns a new process with regeneration of the washing solvents and a system implementing said process.

### 1. State of the art of the industrial washing systems of the single-chamber and vacuum type

The industrial washing systems currently present on the international market are mostly of the single-chamber type. This means that the items and the material to be washed are introduced in a vacuum-tight washing chamber, in which the washing solvent is recirculated once or several times with increasing degree of purity as the process proceeds towards the last washing cycle.

Some variants exist, for example ultrasonic immersion washing, steam washing or other variant processes that in any case are all carried out inside a washing chamber.

At the end of the washing cycle, vacuum is created inside said washing chamber and in this way the residual solvent evaporates due to the very low pressure.

The washing liquids used in single chamber washing systems are mainly constituted by organic solvents, or aqueous solutions, or sometimes a combination of water and solvent. The most used solvents are modified alcohols whose boiling point exceeds 155°C, chlorinated solvents such as tetrachlorethylene and solvents with low boiling point such as methylene chloride, HFEs, HFOs, HFCs and Solstice^{™}, solvents which at atmospheric pressure boil at a temperature between 15°C and 60°C. All the solvents are usually regenerated through distillation. This process constitutes an integral part of the washing process and is usually carried out in the same washing system.

The solvents with high boiling point are currently distilled, even under vacuum, with heating systems based on electric resistances or with hot water produced with electric resistances or fuels.

The vapour produced in this way is then condensed, generally using refrigerated water. Therefore, the solvents with high boiling point require a certain amount of energy, both when it comes to making them evaporate and when it is necessary to condense the vapours produced during distillation. Solvents like HFEs, HFOs, HFCs and methylene chloride which, instead, have a boiling point under 40°C under atmospheric pressure, can be distilled with the same systems used for modified alcohols, but also with heat pumps.

In this case, the heat pump recirculates the refrigerating fluid during the compression step, that is, when it is hot, inside coils immersed in the lower part of the distiller, and then the same refrigerating fluid, which during expansion cools down significantly, is recirculated in the upper part of the distiller. In this way, the only energy involved is the mechanical energy necessary to carry out a refrigerating cycle, since the energy necessary to make the solvent evaporate is compensated for by the energy used for its condensation. Indicatively, distillation with a heat pump requires an amount of energy at least three times smaller than the amount of electric energy used for distillation with resistances and for condensation with refrigerated water.

A limitation of this last method using the heat pump lies in that, if the boiling temperature of the mixture constituted by the solvent and the dirt present in the distiller increases due to the presence of oil and dirt and approaches the temperature reached by the refrigerating fluid, the distillation capacity is reduced until it becomes equal to zero.

A variant of the method, which is applied very frequently, consists in distilling under negative pressure, so that the boiling temperature is lowered to several degrees less than the condensation temperature of the refrigerating fluid. This, however, is difficult to apply in case of distillation of modified alcohols, as their boiling temperature is generally around 170°C under atmospheric pressure. The technology of distillation through thermocompression or compression of the vapours is never used in industrial washing processes, while it is used in the chemical industry and above all in water distillation, both in the pharmaceutical sector and in the field of waste water treatment since, given the same amount of electric power absorbed, it has higher distillation capacity compared to other distillation systems.

However, a thermocompression system for water is generally very expensive, especially if it is going to be used to distil solutions that tend to dirty the heat exchangers with which the system is equipped. This technology has never been taken in consideration in the field of industrial washing systems, due to the considerable cost of a thermocompression distillation system.

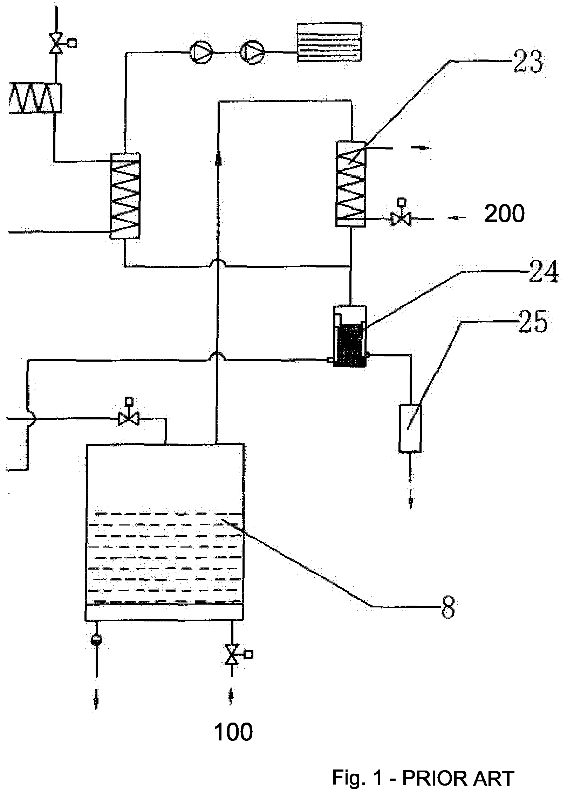

The patent document CN 2010610793 concerns a single chamber metal cleaning machine, schematically shown in the enclosed Figure 1 - PRIOR ART. The machine shown in this document comprises a distiller of the common type, meaning a distiller equipped with an external heat source, namely a steam generator, and a condenser fed by cold water. The machine is also provided with two vacuum pumps that, when and if necessary, lower the boiling temperature by lowering the pressure in the distiller.

Figure 1 clearly shows that the machine illustrated in the prior art document uses an external heat source, more specifically a steam generator, to heat the liquid to be distilled up to the boiling temperature, and furthermore uses an external refrigerator to subsequently condense the vapours. Furthermore, the diagram of Figure 1 shows a condenser located upstream of the vacuum pumps: this technical solution is necessary if the machine uses solvents with a high boiling point such as, for example, perchloroethylene; in this case the pumps must create a negative pressure in the distiller to lower the boiling temperature. The machine is thus of the type traditionally used for metal washing and dry washing, in which solvents with high boiling points are used, and poses the same drawbacks described above.

The invention described below, instead, concerns a process for the industrial washing of industrially manufactured items in general, metallic or non-metallic, such as precision small parts, mechanical parts, printed circuits, lenses, watchmaking items, jewellery items, eyewear or similar items, in which the regeneration of the used solvents is obtained through a first distillation cycle, which does not require the supply of heat from an external source for boiling the solvents, and through the subsequent condensation of vapours, which does not require the use of an external refrigerant.

To sum up, in fact, said first distillation takes place thanks to the use of a first pump that compresses the distillation vapours, thus increasing their temperature and making it possible to use the liquid contained in the distiller, which is at a lower pressure and thus at a lower temperature, as exchange liquid for vapour condensation.

The object achieved by the process in accordance with claim 1 that is the subject of the present patent and by the system in accordance with claim 10 implementing said process is constituted by the fact that no external heat source and no refrigerator are required: the only energy supplied to the system is the mechanical energy necessary for the operation of the pump that draws the vapours from the distiller, and the energy necessary for the operation of a recirculation pump that recirculates the liquid solvent from the distiller to the condenser.

All the energy used to make the solvent evaporate is thus used to condense the vapours.

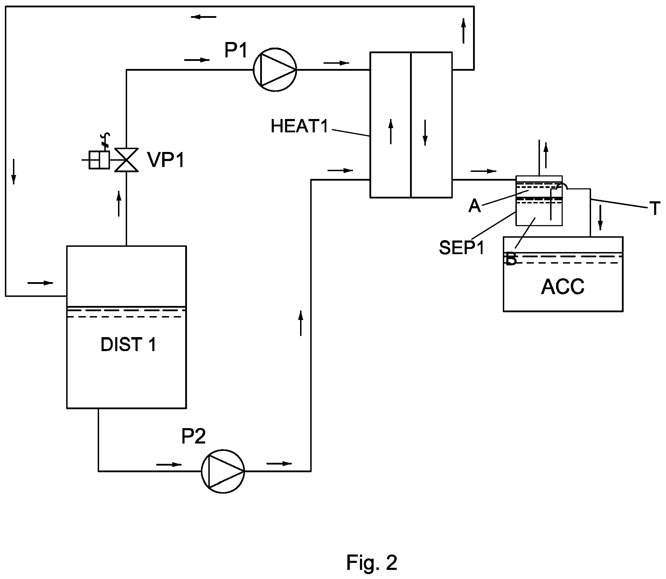

Said process using thermocompression distillation and the system implementing said process, a simplified form of which is schematically illustrated in Figure 2, where the rest of the machine is omitted for the sake of clarity, and in which the main component, meaning the compressor, in this case is a dry vacuum pump, make it possible to integrate the following functions in the industrial washing equipment:
- distillation of the solvent used for the washing cycle;
- vacuum drying in the washing chamber at the end of the cycle;
- distillation of the solvent under vacuum in order to minimize the percentage of washing solvent in the distillation waste.

It is possible to use only one dry vacuum pump, as two of the three functions, meaning the drying of the pieces in the washing chamber and the distillation under vacuum, are used for a time fraction that is considerably short compared to the main function, which is the function of regenerating the solvent through distillation.

The invention can be especially and effectively applied in industrial washing systems of the type with a single chamber, with final vacuum drying, which use organic solvents for the washing cycle, wherein in accordance with the invention said organic solvents have a boiling point included between 15°C and 60°C under atmospheric pressure.

The application of the same method when , not in accordance with the invention, solvents with a higher boiling point are used, instead, involves several drawbacks: a higher boiling point requires more attention during the heat exchange that takes place during the distillation process and may result in higher energy consumption, more overall complexity and thus more critical aspects. For example, when modified alcohols are used and the boiling temperature lowers below 100°C, the density of the vapours is very low, to the point that in order to obtain a sufficient quantity of distillate a compressor with very high flow rate is needed, which also results in high mechanical energy consumption.

On the contrary, the method described and claimed below, which uses solvents with a boiling point at atmospheric pressure included between 15°C and 60°C, can be applied in a simpler manner.

More specifically, the solvents like methylene chloride or other halogenated solvents, more precisely with chlorine and fluorine atoms, having a boiling temperature below 60 °C have also a very high vapour density, so that the application of the present process results to be very interesting from the energy point of view. Furthermore, said solvents are not soluble in water and therefore do not form salts. The boiling temperature inside the distiller does not exceed approximately 50 °C as boiling takes place under negative pressure and even if there were traces of water with salts, the latter would not be deposited on the walls of the exchanger because the temperature is relatively low.

As mentioned above, Figure 2 shows only a part of the system, in order to guarantee more clarity in the description of the distillation process through thermocompression. The process is carried out using a solvent with boiling temperature included between 15 and 60 °C under atmospheric pressure, and in particular, for example, using methylene chloride, which has a boiling temperature of 40°C under atmospheric pressure, as washing solvent.

The thermocompression distiller comprises a container DIST1 of the solvent to be distilled, hereinafter simply referred to as distiller DIST1, a first pump P1, an exchanger HEAT1 and a recirculation pump P2.

The system is thus without external heat sources and cold water sources for the condensation of vapours.

For the sake of simplicity, it is supposed that at the beginning of the distillation cycle the temperature T1 of the solvent is equal to 33°C.

By operating the first pump P1 it is possible to suck the vapours from the distiller DIST1 and convey them to the exchanger HEAT1 compressing them. Compression results in an increase of the temperature of the vapours from 33° to 50°C.

Inside the exchanger HEAT1, which is under negative pressure, more precisely at a pressure that is approximately 70 mbar less than the atmospheric pressure, the temperature of the vapours lowers until reaching the condensation temperature, which is approximately 38°C. The negative pressure, which is 70 mbar lower with respect to the atmospheric pressure, is not a binding condition for the principle of distillation through thermocompression. A slightly negative pressure compared to the atmospheric pressure has been suggested only because in washing systems with halogenated solvents it is preferable to maintain the system at a pressure below the atmospheric pressure in order to avoid small solvent leakages, for example through some critical points such as gaskets or valves.

The vapours come into contact with the surface of the exchanger HEAT1, inside which the solvent at the temperature of 33°C coming from the distiller DIST1 is recirculated through said recirculation pump P2.

The thermal condensation energy is thus transferred to the solvent, which is conveyed back into the distiller DIST1, where it partly evaporates.

In simpler words, the system uses the same liquid to be distilled, contained in the distiller DIST1, to condense the vapours that have been compressed by the first pump P1 and that therefore have a higher condensation temperature than the liquid.

The process is self-regulating and the boiling temperature is automatically stabilized according to the pump flow rate, the exchange surface of the exchanger HEAT1 and heat dissipation towards the outside.

In particular, since the difference between the condensation temperature of the vapours and the temperature of the liquid is small, it is advisable that the heat exchange surface in the exchanger HEAT1 be sufficiently large and that the recirculation pump P2 have a very high flow rate, while on the contrary its head can even be very low.

Once stabilized, the process can thus proceed with no need for any external heat source or any refrigerant source.

The amount of energy used to carry out the distillation process can thus be from 5 to even 30 times smaller than the energy necessary to distil the same quantity of solvent in a distiller of the traditional type, similar to that schematically shown in Figure 1.

If at the beginning of the distillation cycle the solvent temperature is lower than the ambient temperature, the quantity of distillate will initially be very low. In any case, said pump P1 is able to extract and compress the vapours, even if very rarefied. Evaporation lowers the boiling temperature of the liquid, which therefore in the exchanger will have a lower temperature compared to that of the vapours. Therefore, the condensation process will take place in any case, even if the quantity of distillate obtained will initially be small. However, the mechanical energy of the pump P1 and of the pump P2 transferred to the system raise the temperature until reaching a balance point.

To conclude, the novelty of the present process and of the system implementing said process lies in the presence of the pump P1 which induces a difference in pressure between the liquid to be distilled and the vapours to be condensed.

It should also be noticed that the pump can be used also in a different way, maintaining the atmospheric pressure in the distiller and a higher pressure in the condenser, thus obtaining a high density of the sucked vapours and thus high efficiency.

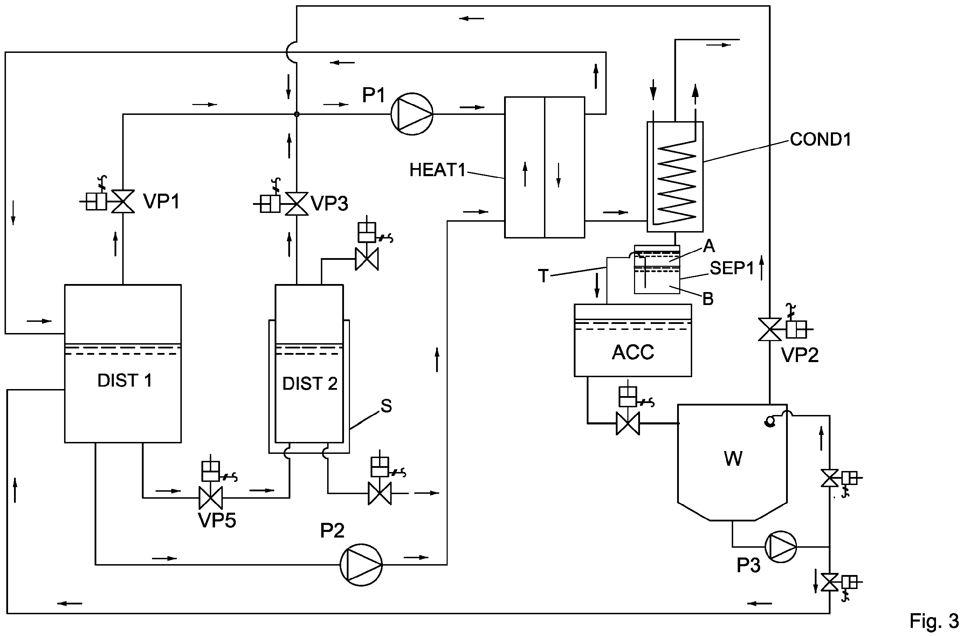

Figure 3 shows a simplified hydraulic and instrumental diagram which describes a first embodiment of the industrial washing process and system, without any indication of instruments and components such as filters, temperature sensors, level sensors, pressure and vacuum sensors, which are present in practice, as known to the expert in the art, but do not need to be specifically mentioned herein to explain how the system works and performs its functions.

In this first solution, the system comprises:
- at least one washing chamber W designed to contain the material to be washed;
- at least one first distiller or main distiller DIST1, where the washing liquids coming from said washing chamber W are conveyed through a delivery pump P3;
- at least one first dry pump P1 connected to said first distiller DIST1 and suited to suck the vapours from said first distiller DIST1 and convey them to at least one exchanger HEAT1;
- said at least one exchanger HEAT1 suited to condense said vapours coming from said first distiller DIST1;
- at least one second pump or recirculation pump P2 suited to convey the washing liquid from said first distiller DIST1 to said exchanger HEAT1, where it is used for the heat exchange during the condensation of said vapours, and subsequently to recirculate said liquid again in said first distiller DIST1.

### 2. Description of the distillation function/step performed through thermocompression

Concisely, this function is performed by sucking the vapours from the top of said first distiller DIST1 through said first dry vacuum pump P1 which creates a certain negative pressure in said first distiller DIST1 and therefore lowers the boiling temperature of the solvent contained therein. The outlet of said first dry pump P1 is at atmospheric pressure or at a slightly lower pressure, if the system is under a slightly negative pressure with respect to the atmospheric pressure, as is often done to reduce random leakages of solvents with a low boiling point.

Said first distiller DIST1 can even be at atmospheric pressure and said first dry pump P1 can compress the vapours sucked from said first distiller DIST1 even exceeding the atmospheric pressure. In any case, whatever the pressure in said first distiller DIST1, by sucking and compressing the vapours it is possible to obtain a difference in pressure between the boiling liquid and the compressed vapours that must be condensed.

The difference in pressure, as is known from physical chemistry, causes a difference in temperature. Thus, the liquid, at a lower pressure than the vapours compressed by said first dry pump P1, has a lower temperature than the condensing vapour downstream of the first pump P1 itself.

The thermocompressors of the known type work as follows: instead of using an external cold source, to condense the vapours the liquid contained in a distiller, whose temperature is a few degrees lower than the vapour condensation temperature, is conveyed to an exchanger. The liquid, flowing into the exchanger and coming into contact with the hotter wall touched by the vapours, warms up and partially evaporates while flowing back into said distiller, where the pressure is lower. Therefore, the total quantity of energy required to condense the vapours is equal to the quantity of energy supplied to create them in said distiller.

With reference to the hydraulic diagram shown in Figure 3, the outlet of said first dry pump P1 is connected to an exchanger HEAT1 having a large surface, where the vapours are condensed through the heat exchange that takes place with the solvent pumped from said distiller DIST1 through a second pump, or recirculation pump P2 with low head and high flow rate. This recirculation pump P2 does not require high power since heat exchangers generally have very low flow resistance. Instead, a high flow rate is required, because the difference in temperature between liquid and vapour is very low.

In said exchanger HEAT1, the pressure of the vapours is always higher than the pressure inside said first distiller DIST1, since said first dry pump P1 behaves like a vapour compressor, even if with a very limited compression ratio.

The difference in pressure between said first distiller DIST1 and the vapour side of said exchanger HEAT1 created by said first dry pump P1 causes the solvent to boil in the first distiller DIST1, but at a lower temperature than the condensation temperature, since condensation takes place at a higher pressure. The solvent in the liquid phase is colder than the vapours compressed by said first dry pump P1 and is thus used as a liquid for condensing vapours. When the system reaches the balance conditions, a thermal and pressure regime is established upstream and downstream of said first dry pump P1, said regime depending on the capacity of said exchanger HEAT1, the mechanical power transmitted to the vapours during the compression process, and the heat exchange of the entire system (distiller DIST1, first dry pump P1, recirculation pump P2, pipes etc.) with the environment.

If all of these components are well insulated, the distillation capacity is equal to the flow rate of said first dry pump P1 expressed in kg/m3, slightly increased due to the fact that the mechanical energy of the motor of said first dry pump P1, transferred to the vapours, contributes to the distillation process, too, as mechanical energy is transformed into heat.

In the field of solvents with boiling point included between 15°C and 60°C, the heat exchange with the environment is limited and therefore the distillation capacity is only slightly affected by the environmental conditions.

However, if when said first distiller DIST1 is started the solvent temperature is several degrees lower than the boiling temperature, the solvent starts boiling at a much lower temperature and therefore more rarefied vapours are generated, which results in a decidedly lower distillation capacity, expressed in Kg/h.

The mechanical energy of said recirculation pump P2 and the energy transmitted to the vapours by said first dry pump P1 slowly increase the distillation temperature, until reaching a balanced situation. In order to reach the balance conditions more quickly, at the beginning of the distillation cycle or step it is possible to activate a small heating system constituted, for example, by a coil with hot water flowing therethrough or by small heating resistances which, through the bottom or the walls of said first distiller DIST1, heat the fluid to be distilled. Once the balance conditions have been reached, the heating process can be interrupted.

Said first dry pump P1, however, is used also to dry the washed pieces under vacuum, so that a condenser COND1, which has the purpose of condensing the vapours extracted from the washing chamber W of the washing system, is installed in series with said exchanger HEAT1.

Sometimes a certain quantity of water is introduced in said distiller DIST1 together with the pieces to be washed and a small part of this water is distilled, too. Therefore, the distillate obtained may be constituted by a mixture of solvent and small traces of water, which is not soluble in the solvent if not in a very limited percentage.

Therefore, downstream of said condenser COND1 there is a water-solvent separator SEP1 which, exploiting the difference in density between water and solvent and the fact that the two components are actually not mixable, allows a distillate without water to be obtained.

The diagram of Figure 3 shows that the mixture water-solvent that flows into said separator SEP1 is stratified in two layers A, B, of which the upper layer A is constituted by water, which is lighter than the solvent, while the lower layer B is constituted by solvent.

A pipe T that draws from the bottom of said separator SEP 1 then allows the solvent without water to flow out, except for a very small percentage of water, which is due to the solubility of water in solvent at a molecular level. The solvent separated from the water is recirculated in a distillate storage tank ACC.

During the thermocompression distillation process, said first distiller DIST1, or main distiller, is connected to a second distiller DIST2 through a valve VP5. Said second distiller DIST2 is thus arranged in parallel to said first distiller DIST1 but is fed by a small heat source S, for example constituted by hot water contained in a jacket or in heating resistances, which allows a small quantity of solvent to be distilled.

Thus, clean solvent in the vapour phase flows out of said second distiller DIST2, while solvent in the liquid phase, coming from said first distiller DIST1 and containing dirt or oil, flows into said second distiller DIST2.

Since oil and dirt do not evaporate, as the clean solvent flows out in the form of vapours, the concentration of dirt in said second distiller DIST2 increases and consequently also the distillation temperature increases. When the distillation temperature reaches a value that is close to the temperature of the heat source S, the distillation process stops. At this point it is necessary to start the vacuum distillation process described below.

### 3. Description of the vacuum drying step carried out in the washing chamber at the end of the washing cycle.

This function is activated when requested by the program that manages the system's washing cycle. Said drying step is started by closing a first valve VP1 that connects said dry pump P1 to said first distiller DIST1 and stopping said recirculation pump P2. At this point a second valve VP2 is opened, which connects said dry pump P1 to said washing chamber W.

Said dry pump P 1 sucks the vapours from said washing chamber W and said vapours flow through said exchanger HEAT1 without condensing. Said vapours, instead, are condensed in said condenser COND 1, which is fed by refrigerated water. The condensed vapours pass into said separator SEP1 and from there they flow into said distillate storage tank ACC.

The material drying step carried out in said washing chamber W generally ends when an absolute pressure of just a few mbar is reached, a value which is set based on the washing program and the characteristics of the material to be washed. Said drying step can last from less than one minute to maximum a few minutes. The washing cycles generally last between 10 and 20 minutes, so the period during which said first dry pump P1 is used for said drying step is significantly shorter than the period during which it is used for said thermocompression distillation step described above.

### 4. Description of the step of solvent distillation under vacuum performed to minimize the percentage of solvent in distillation waste.

The industrial washing equipment and systems serve the function of removing dirt from the materials to be washed, dirt which is generally constituted by processing residues, chips, emulsifiable oil, neat oil and dirt of various kinds. The corpuscular part of the dirt is generally blocked by the filters inserted in the washing circuit, which are not indicated in the attached drawings to simplify the hydraulic diagram, while the liquid part coming from the washing chamber W ends first into said first distiller DIST1 and then into said second distiller DIST2, where it is most concentrated. Thus, sooner or later it is necessary to remove the oil/dirt residues, by distilling thoroughly, meaning under high vacuum, the liquid contained in said second distiller DIST2.

Said operation is carried out by:
- closing said first valve VP1 that connects said first distiller DIST1 and said first dry pump P1;
- closing said valve VP5 that connects said first and second distillers DIST1 and DIST2;
- opening a valve VP3 that connects said second distiller DIST2 and said first dry pump P1;
- stopping said recirculation pump P2;
- keeping said first dry pump P1 functioning.

In an alternative solution, between said first and said second distiller DIST1 and DIST2 there is a transfer pump, not indicated in the figures, wherein said transfer pump is suited to transfer the liquid to be distilled under vacuum from said first distiller DIST1 to said second distiller DIST2, when necessary.

The vacuum generated by said first dry pump P1 and the heat generated by said heat source S with which said second distiller DIST2 is equipped make it possible to continue the distillation process in said second distiller DIST2 itself, until the solvent evaporates almost completely, leaving only the dirt in said second distiller DIST2.

For example, using hot water at 80°C as heat source S and setting a maximum boiling temperature of 80°C, since the boiling temperature of the solvents used in this system does not exceed 60°C, the combination of the very low absolute evaporation pressure due to said first dry pump P1 with the heat transmitted to the liquid to be distilled makes it possible to obtain a distillation residue with a very low solvent percentage, even markedly below 1%, at the end of the process.

The absolute temperature and pressure necessary to conclude the vacuum distillation process must be defined by the user based on the type of residue, which may be simply constituted by oil, or may contain cleaning pastes or have a muddy consistency that makes it difficult to drain. The shape of said second distiller DIST2 and the distillation residue draining mode must be decided according to the type of pollutant to be removed.

In a washing system in which the quantity of dirt and oil is negligible, the addition of the second distiller DIST2 in parallel to the main distiller DIST1 can be avoided. In this case, when the distillation capacity tends to decrease due to the increase in the quantity of oil and dirt that gets into said main distiller DIST1, it is possible to carry out the vacuum distillation process in the main distiller DIST1 itself, which therefore must be equipped with a heat source or heating means to reach approximately 80°C and must be structured in such a way as to resist high vacuum.

### 5. Calculation of the cost of thermocompression distillation of a solvent

The calculation concerns only the function of distillation through thermocompression, as the function of distillation under vacuum and the vacuum drying of the washed pieces require a negligible amount of energy compared to that necessary to regenerate the solvent.

The solvent taken in consideration for the calculation is methylene chloride, which has a boiling temperature of 40°C under atmospheric pressure and is among the solvents suited to be effectively used in the new system.

As to chlorinated solvents, according to several national standards the whole system should remain under a slightly negative pressure with respect to the atmospheric pressure, in such a way that if the degree of tightness is insufficient due to a faulty gasket or valve, the solvent does not leak out and, instead, airs flows in. A system is provided to ensure that no abnormal air inflow takes place.

The solvents with low boiling point, which evaporate easily, do not form drops in the points with any leakages, in fact evaporation takes place immediately, unless the leakage is severe. In the case where the system is not under negative pressure, therefore, there is the risk of losing a high quantity of solvent even if no considerable leakage can be observed visually. Consequently, it is advisable to always keep the system under negative pressure, 24/7.

Inevitably, during some steps of the cycle the pressure in some pipe sections exceeds the atmospheric pressure. They are, for example, the liquid recirculation pipe of the distiller DIST1 and the delivery pipe of the washing pump P3. Depending on the type of washing cycle, there may also be other parts of the system at positive pressure. The rest of the system always remains under negative pressure.

Calculation data concerning the new system as described above:
- negative pressure at which the system is kept: -70 mbar;
- boiling temperature inside said first distiller DIST1: 33°C;
- vapour condensation temperature at -70 mbar: 38°C;
- boiling pressure: 800 mbar;
- methylene chloride evaporation heat: 330 kjoule/kg;
- density of the methylene chloride vapours at distillation temperature and pressure: 2.656 Kg/m3;
- rated flow rate of the thermocompressor: 350 m3/h;
- flow rate of the vapours sucked by said dry pump P1: 930 Kg/h;
- overall electric power absorbed by said dry pump P1 and by said recirculation pump P2: 11 KW;
- distillate produced per KW: 84 Kg/h.

### 6. Calculation of the cost of solvent distillation carried out through a traditional distiller with electrical heating and successive condensation with refrigerated water

The energy required for the evaporation or condensation of 1 kg of methylene chloride is equal to 330 kjoule.

This energy must be added to that necessary to produce refrigerated water by means of a refrigerator. Generally, the electric energy consumed by a refrigerator amounts to 30% of the energy yielded as thermal energy, so the value of 330 kjoule/kg must be increased by 30%.

Therefore, 429 kjoule, corresponding to a power of 0.120 KW applied for 1 hour, are needed in total to distil 1 kg of methylene chloride.

Therefore, with 1 KW it is possible to distil and condense 8.33 Kg of solvents against the 84 Kg obtained with the new method employing thermocompression.

The calculations presented above concerning thermocompression have been made considering a washing system always under negative pressure, for evident safety reasons; the calculations change in the case where the system is at atmospheric pressure or, even better, if the part located downstream of said first dry pump P1, including said heat exchanger HEAT1, is under positive pressure, for example at 200 mbar.

In this last case, the solvent vapours are drawn from said first distiller DIST1 under atmospheric pressure and therefore their density is higher. Consequently, the quantity of distillate produced is higher, too.

Finally, if the condensation process takes place at a higher pressure and therefore with a difference in temperature between the cooling liquid in said exchanger HEAT1 and the condensing vapours at a pressure exceeding the atmospheric pressure, a lower flow rate of said recirculation pump P2 is necessary, with consequently lower energy consumption and a smaller exchange surface, therefore with a further reduction in operating and energy costs.

Indicatively, if the thermocompression distillation process according to the new method takes place at atmospheric pressure or at a pressure slightly higher than the atmospheric pressure, the distillation capacity, given the same amount of power, can be even 20-30% higher compared to the value calculated above.

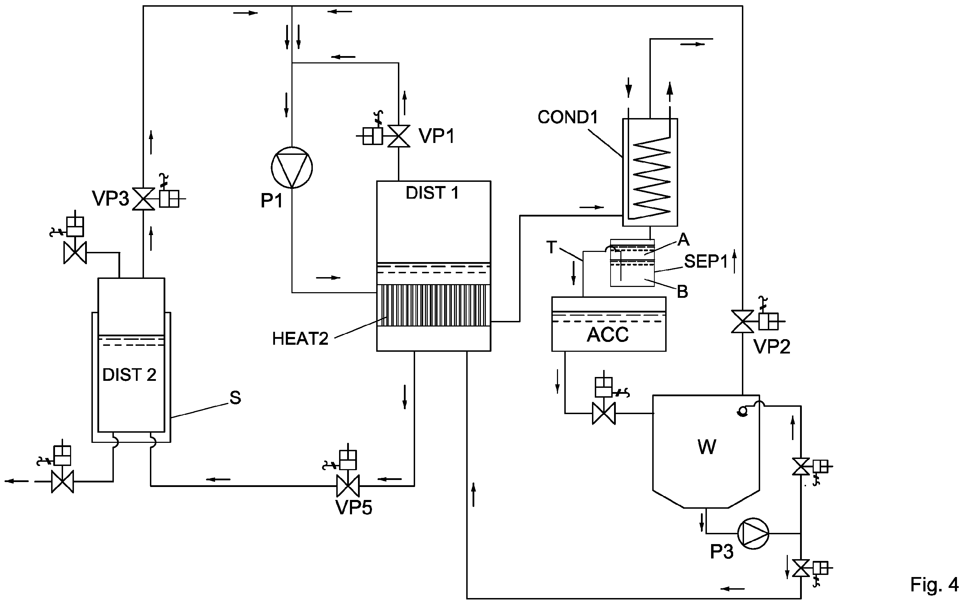

### 7. Construction variant in which said exchanger HEAT2 is installed on said first distiller DIST1, is preferably of the type with tube bundle and is immersed in said first distiller DIST1, thus obtaining even higher energy efficiency (Figure 4)

A variant embodiment is constituted by a tube bundle exchanger provided in the lower part of said first distiller DIST1. The tubes of said exchanger HEAT2 are thus immersed in the liquid to be distilled while the vapours are conveyed into the space outside the tubes by the dry pump.

Even if a tube bundle exchanger located inside the distiller is generally more expensive than an external exchanger, this configuration offers the great advantage of avoiding the use of said recirculation pump.

To clean the exchanger HEAT2, if necessary, it will be sufficient to open and empty said first distiller DIST1.

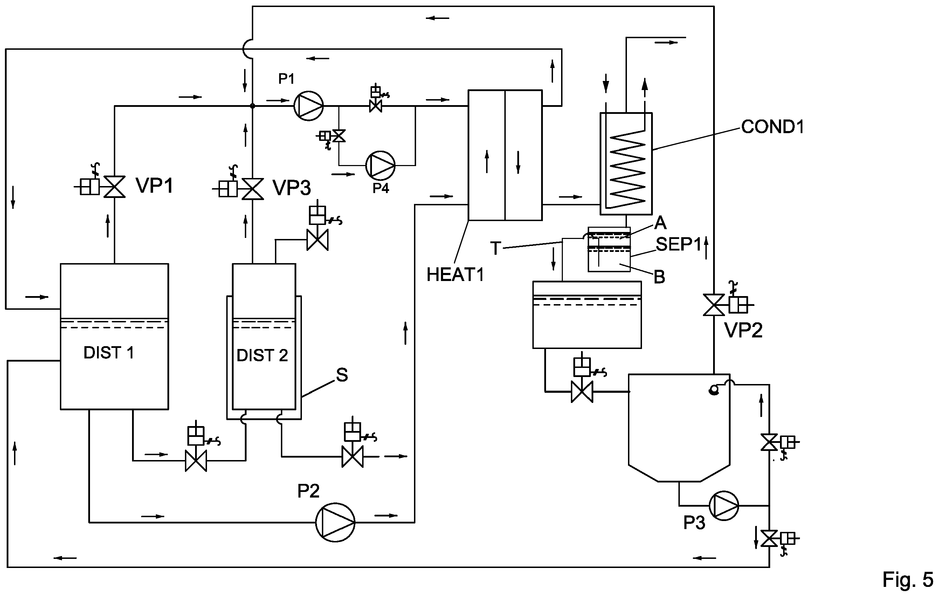

### 8. Construction variant for high distillation flow rates and even higher energy efficiency, carried out with two dry pumps P1, P4 in series (Figure 5)

This variant is equal to that shown in Figure 3, except for the fact that the system comprises two dry pumps P1, P4 in series, of which said first dry pump P1, for example of the roots type, is capable of pumping large flow rates of steam at low head and thus is not able to create high vacuum, and the second dry pump P4 has a lower flow rate but is capable of creating high vacuum, especially if installed in series with said first, larger dry pump P1.

The flow rate of said second dry pump P4 can be even three times smaller than that of said first dry pump P1, since it sucks vapours that are already partially compressed. The advantage of this configuration lies in that the thermocompression cycle does not require the use of a compressor capable of creating high vacuum, rather it requires only a compressor with a high flow rate and a low compression ratio, which therefore needs less compression energy.

Said two dry pumps P1, P4 together thus constitute the best combination for obtaining very large quantities of distillate, with low energy consumption and at the same time the ability to create high vacuum when necessary.

According to a further construction variant, a liquid ring pump is used instead of a dry pump P4. This type of pump does not reach a high degree of vacuum due to the vapour tension of the operating liquid, unless the latter is cooled with an external refrigerator in such a way as to reduce the vapour tension to a very low value. In this case, instead of using water as operating fluid, which is common practice in most of the applications with liquid ring pumps, it is possible to use the washing solvent itself. In the event that water, which cannot be mixed with the solvents considered above, is used, it is necessary to provide a suitable system for separating water from solvent, similar to said separator SEP1 but properly sized. For the sake of simplicity, the recirculation tank of the liquid ring pump and the water-solvent separator, if any, are not indicated, as these solutions are known to the operators who normally use this kind of pumps.

The configuration with the first dry vacuum pump P1 only, as shown in Figure 3, is valid in any case for washing systems that do not need large quantities of pure solvent and that usually represent most of the applications.

### 9. Other functions performed by the same vacuum pump used for thermocompression distillation

A washing machine does not consist only of a distiller to regenerate the solvent but is made up of several other components suited to perform the functions necessary to carry out a washing cycle.

The main functions performed by a washing machine with a single chamber based on vacuum technology, therefore, are the following:
- washing of the pieces in the vacuum tight washing chamber;
- drying of the pieces in the washing chamber, which generally requires an absolute pressure of just a few mbar;
- regeneration of the solvent through distillation;
- distillation of the solvent under vacuum when a large quantity of oil and dirt has been removed during the washing cycle;
- separation of water from solvent due to gravity, since the solvents mentioned in the patent are not soluble in water, which is often present in the washed pieces.

A washing cycle can last from just a few minutes to 1 hour, according to the material to be washed and to the capacity of the machine. By way of example, it can be supposed that 3 washing cycles are performed every hour. A small quantity of oil and dirt is removed from the washing chamber at every cycle and enters the main thermocompression distiller.

Oil and dirt increase the boiling temperature of the solvent, while on the contrary the condensation temperature remains constant because the condensate does not contain oil. Therefore, in the presence of oil that increases the boiling temperature, the heat exchanger automatically reduces the passage of condensation energy into the liquid, as the difference in temperature between liquid and vapour has decreased. A part of the vapours is thus condensed in a small condenser containing cold water, which is installed in series with the main exchanger.

The vacuum pump, however, continues to draw the vapours from the distiller and this lowers the boiling temperature of the liquid, so that a new condition of balance is automatically established, as the colder liquid allows all the vapours sucked by the pump to be condensed. The lower boiling temperature consequently reduces also the density of the vapours and, since the volumetric flow rate of the dry pump is constant, the quantity of distilled solvent expressed as weight decreases. Slowly, as the quantity of oil introduced in the distiller reaches a high concentration, the boiling temperature and the density of the vapours become so low that it is not convenient to continue the thermocompression distillation process any longer.

Therefore, the value of oil concentration in the distiller must not be excessively high. This can be obtained by installing - in parallel to the thermocompression distiller - a small classical distiller equipped with a small independent heat source. Indicatively, this distiller indicated by DIST2 should not contain more than 10% of the solvent contained in the main distiller DIST1.

With a small source of thermal energy, obtained, for example, with a heating element on the bottom, this distiller can produce one tenth of the solvent compared to the main distiller. The mixture of solvent and low concentration oil thus flows into the distiller DIST2 while, on the contrary, only vapours of pure solvent flow out of this distiller, so that the quantity of oil remaining in the distiller DIST2 slowly increases and so does also the boiling temperature, until the latter reaches a maximum value established during the design step.

At this point the oil must be removed from the distiller DIST2, which is isolated from the rest of the system and maintained in operation by carrying out a vacuum distillation process, connecting it to the dry pump P1 used for the thermocompression.

This vacuum distillation in the secondary distiller DIST2 is obviously carried out when the machine is at rest regarding the washing of the pieces. Vacuum distillation indicatively requires 10-30 minutes and largely depends on the quantity of oil brought inside the machine by the pieces to be washed.

Vacuum distillation in the distiller DIST2 can be carried out when the operator who manages the machine deems it convenient, for example at the end of the work shift, or during weekends. The distillation capacity of the distiller DIST2 depends on the quantity of oil and dirt removed by the washing process daily. Indicatively, this capacity is included between 5% and 10% of the distillation capacity of the thermocompression distiller DIST1.

The dry pump P1, when connected to the vacuum distiller DIST2, must be able to create absolute vacuum, meaning very few mbar, while, on the contrary, when it works as a thermocompressor it compresses the vapours by approximately 200-300 mbar with respect to the boiling pressure.

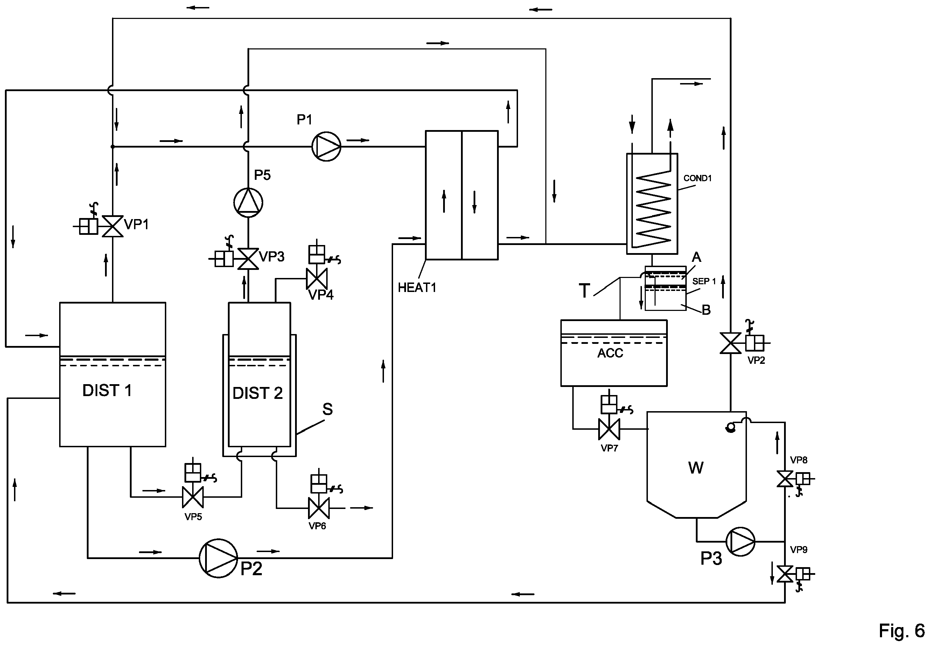

The absolute pressure of just a few mbar in the distiller DIST2 can be achieved by one or more vacuum pumps arranged in series, while if production is very high it is possible to use a small vacuum pump capable of reaching an absolute pressure of a few mbar in the distiller DIST2 only, as shown in Figure 6, and to reserve a much larger pump or a combination of pumps arranged in series, as described in Figure 5, only for thermocompression and vacuum drying.

### 10. Vacuum drying

This step requires that vacuum be created inside the washing chamber in order to dry the pieces, until reaching an absolute pressure of just a few mbar. For this operation it is possible to use the same vacuum pump P1 used for thermocompression in the distiller DIST1.

A vacuum drying cycle in the washing chamber lasts a few minutes, during which thermocompression distillation is suspended.

The quantity of solvent removed for the drying step in the washing chamber, performed using the pump P1, is very low and therefore, even if a few minutes are dedicated to this operation for each washing cycle, the thermocompression distillation capacity is only slightly affected.

Once the solvent has been drained at the end of the washing cycle, a washing chamber having an inner volume of 1 cubic metre contains approximately 3-5 kg of solvent, while the thermocompression distillation capacity obtained with the same pump P1 having, for example, a flow rate of 350 m3/h is in the order of 15 l/min.

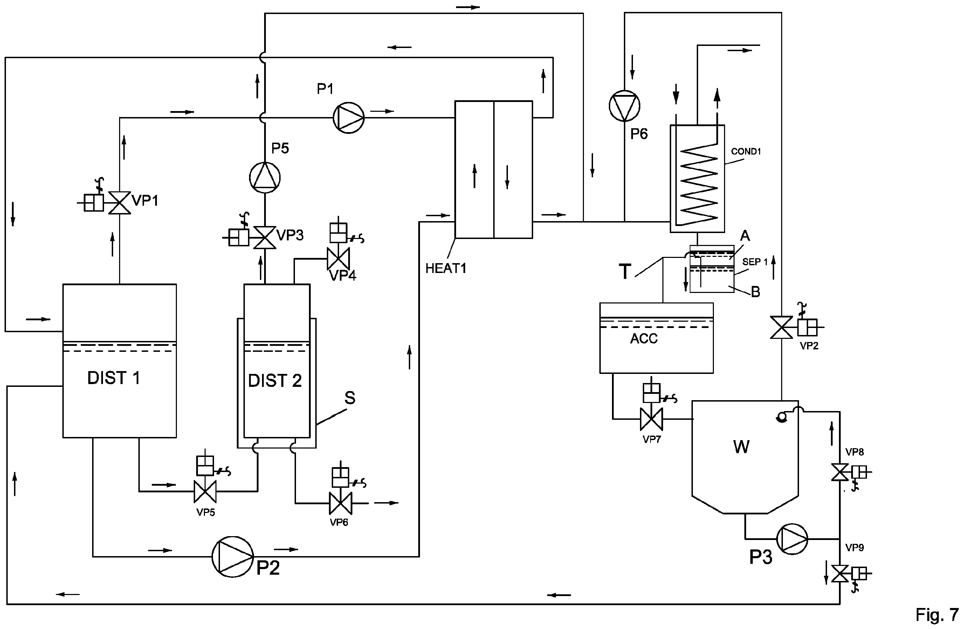

In the case of a very large washing system requiring a large quantity of regenerated solvent, a dry pump P1 can be used for thermocompression distillation while a second vacuum pump P6 can be dedicated to the drying step in the washing chamber and a third vacuum pump P5 can be dedicated to vacuum distillation, as shown in Figure 7.

The first dry pump intended for thermocompression, which requires that the vapours be compressed by no more than 500 mbar, is less expensive than a pump capable of reaching an absolute pressure of just a few mbar.

For most applications, only one dry pump capable of reaching an absolute pressure of 1 mbar is thus sufficient to carry out the three most important functions of a washing machine, that is:
- thermocompression distillation, which is necessary to regenerate the solvent without supplying thermal energy and without supplying cold water;
- vacuum drying in the washing chamber;
- vacuum distillation to recover most of the solvent from the oil and dirt that are going to be disposed of. This operation can be carried out occasionally or during pauses, when the machine is not used for washing purposes.

### 11. Additional refrigerated water condenser

The complete hydraulic diagram attached to the patent (Figure 5) indicates that a condenser COND1 using refrigerated water is installed in series with the main exchanger HEAT1. However, this condenser does not have the function of condensing the solvent vapours produced by a standard distiller like the one indicated in the hydraulic diagram of the patent with reference D1, as a thermocompression distiller is characterized by the fact that it uses the condensation heat completely to make the solvent evaporate.

This condenser COND1 is necessary to condense the vapours removed from the washing chamber while the pieces are being dried and to condense the vapours produced by the small distiller DIST2. Independently of the type of distillation, a machine that uses vacuum to dry the pieces and carry out a vacuum distillation process needs this condenser COND1.

However, the average quantity of solvent removed every hour to dry the pieces and carry out a vacuum distillation process is negligible compared to the quantity of solvent regenerated through thermocompression distillation, as indicated in the previous chapters.

Finally, this condenser COND1 serves the function of condensing any excess solvent vapours in the presence of severe environmental conditions, for example if the temperature inside the machine exceeds 30°C.

Obviously, if the ambient temperature is high, also the quantity of solvent produced increases, being the sum of what has been produced through thermocompression and what is due to the mechanical energy dissipated in the system.

The energy necessary to operate the washing machine installed in a room at a temperature below 20°C is dissipated by the walls. However, if the room temperature is high, the energy dissipated by the thermocompression pump P1 and by the recirculation pump P2 must be removed by a cold water condenser or in any case by a refrigeration system.

### 12. Conclusion

The washing machine that is the subject of the present invention uses solvents with a boiling point included between 15°C and 60°C, the most significant of which is methylene chloride, and is characterized by the presence of a system for regenerating the solvent through thermocompression which, to produce the same quantity of distillate produced by a distiller similar to those used in the currently known washing machines, requires much less energy, as all the energy used to condense the vapours is recovered to evaporate the solvent.

According to the size of the machine and the type of solvent, the energy consumption of the new machine can be from 5 to 30 times smaller compared to that required by a standard distiller.

Furthermore, the three main functions of the machine can be carried out in the simplest configuration by one dry pump only or by two dry pumps in series, thus making it possible to obtain a system with a limited number of components, and thus less expensive than traditional machines. The three main functions can be performed also by independent vacuum pumps, on the only condition that one of these pumps must be dedicated to the regeneration of the solvent through vapour compression.

No washing machine in the world currently uses thermocompression to regenerate solvent.

These are the schematic outlines that are sufficient to the expert in the art to carry out the invention, consequently on practical application variants may be developed which do not affect the substance of the innovative concept introduced herewith insofar as these are within the scope of the invention which is delimited by the appended claims.

Therefore, with reference to the above description and the attached drawings, the following claims are expressed.

## Claims

1. Industrial washing process for items resulting from industrial production in general, using solvents and comprising the following steps:
- washing of said items in at least one vacuum-tight washing chamber (W) using at least one solvent;
- regeneration of said solvent coming from said washing chamber (W) through a first distillation step performed in at least one first distiller (DIST1) and condensation in at least one exchanger (HEAT1);
- drying of said material in said vacuum chamber (W);
**characterized in that**
said at least one solvent is a solvent which at atmospheric pressure boils at a temperature between 15°C and 60°C, and **in that**
said step of regeneration of said solvent is carried out through thermal compression, which more specifically comprises the following steps:
- suction of the vapours of said solvent from said first distiller (DIST1) through a first pump (P1) interposed between said first distiller (DIST1) and said exchanger (HEAT1),
- compression of said vapours at a higher pressure compared to the pressure present in said first distiller (DIST1), so that the temperature of said compressed vapours is higher than the boiling temperature of said solvent in the liquid state contained in said first distiller (DIST1);
- introduction of said compressed vapours in said at least one exchanger (HEAT1);
- introduction of said solvent in the liquid state contained in said first distiller (DIST1) in said at least one exchanger (HEAT1);
- heat exchange in said at least one exchanger (HEAT1) between said compressed vapours and said solvent in the liquid state, wherein the thermal energy of condensation of said vapours is transmitted to said liquid solvent,
- recirculation of said liquid solvent in said first distiller (DIST1),
- so that the evaporation of said liquid solvent in said first distiller (DIST1) takes place without a further supply of thermal energy from an external source, but only with the thermal condensation energy yielded by said compressed vapours.

2. Process according to claim 1, **characterized in that** it comprises a further vacuum distillation step designed to further concentrate the distillation residues, and wherein said vacuum distillation step is performed using said first dry pump (P1).

3. Process according to claim 1 or 2, **characterized in that** said regeneration step occurs at a different time than said drying step and said possible vacuum distillation step.

4. Process according to one of the preceding claims, **characterized in that** said thermocompression regeneration step is performed using said first dry pump (P1), while said further vacuum distillation and drying steps are performed using a second dry pump (P4) in series with said first dry pump (P1) to obtain greater negative pressure.

5. Process according to one of the preceding claims, **characterized in that** the evaporation pressure and the condensation pressure range from -500 mbar to +500 mbar.

6. Process according to claim 5, **characterized in that** it is performed with the entire system at a slightly negative pressure.

7. Process according to claim 6, **characterized in that** it is performed with an atmospheric pressure system, while the pressure in the delivery of said first dry pump (P1) and in said exchanger (HEAT1) is maintained at a greater pressure than atmospheric pressure.

8. Process according to any of the preceding claims, **characterized in that** it also comprises the step of condensation of the vapours extracted from said washing chamber (W), wherein said condensation takes place in at least one condenser (COND1) in series with said exchanger (HEAT1).

9. Process according to claim 8, **characterized in that** it also comprises the step of separation by density of the water and the solvent that are contained in the liquid coming from said at least one condenser (COND1).

10. Solvent washing system configured to implement the process according to any of the preceding claims, **characterized in that** it comprises:
- at least one vacuum-tight_washing chamber (W) intended to contain the material to be washed;
- at least one first distiller or main distiller (DIST1), where the washing liquids coming from said washing chamber (W) are conveyed;
- at least one first dry pump (P1) connected to said first distiller (DIST1) and suited to suck the vapours from said first distiller (DIST1) and convey them to at least one exchanger (HEAT 1, HEAT2);
- means for introducing said solvent in the liquid state contained in said first distiller (DIST1) in said at least one exchanger (HEAT1);
- said at least one exchanger (HEAT1, HEAT2) suited to condense said vapours coming from said first distiller (DIST1) and suited for the heat exchange between said compressed vapours and said solvent in the liquid state, wherein the thermal energy condensation of said vapours is transmitted to said liquid solvent;
- means for recirculating said liquid solvent in said first distiller (DIST1);
and wherein said first dry pump (P1) selectively serves as a compressor to compress said vapours in such a way that their temperature inside at least one exchanger (HEAT1) exceeds the temperature of the liquid contained in said first distiller (DIST1) or as a suction pump to suck the vapours from said washing chamber (W) during the drying step,
and wherein no external source further supplies thermal energy to said first distiller (DIST1) where the evaporation of said liquid solvent takes place only with the thermal condensation energy yielded by said compressed vapours.

11. Solvent washing system according to claim 10, **characterized in that** it also comprises at least one second pump or recirculation pump (P2) suited to convey the washing liquid from said first distiller (DIST1) to said exchanger (HEAT1), where it is used for the exchange of heat in the condensation of said vapours and then to recirculate said liquid into said first distiller (DIST1) again.

12. Solvent washing system according to claim 10, **characterized in that** it comprises a second dry pump or liquid ring pump (P4) mounted in series with said first dry pump (P1) and featuring a lower flow rate than said first dry pump (P1).

13. Solvent washing system according to claim 10, **characterized in that** said exchanger (HEAT1) is external to said first distiller (DIST1).

14. Solvent washing system according to claim 10, **characterized in that** said exchanger (HEAT2) is of the tube bundle type and is mounted inside said first distiller (DIST1) so that it is immersed in the liquid to be distilled.

15. Solvent washing system according to one of the claims from 10 to 14, **characterized in that** it also comprises at least one condenser (COND1) in series with said exchanger (HEAT1, HEAT2) for the condensation of the vapours extracted from said washing chamber (W) by means of said first dry pump (P1) and possibly also by means of said second dry pump or liquid ring pump (P4).

16. Solvent washing system according to claim 15, **characterized in that** it comprises at least one separator (SEP1) positioned downstream of said at least one condenser (COND1) and intended to receive the liquid from said condenser (COND1), and wherein said separator (SEP1) comprises a duct (T) suited to collect the solvent separated from the water by gravity and recirculate it in at least one storage tank (ACC) which in turn is hydraulically connected to said washing chamber (W).

17. Solvent washing system according to one of the claims from 10 to 16, **characterized in that** it comprises at least one second distiller (DIST2) configured to perform a further vacuum distillation of the liquid coming from said first distiller (DIST1) through a valve (VP5) and/or through a transfer pump mounted between said first and said second distiller (DIST1, DIST2), *and wherein* said second distiller (DIST2) comprises at least one heat source (S) and is connected at least to said first dry pump (P1) by means of a further valve (VP3), *and wherein* said dry pump (P1) also serves as a suction pump to suck the vapours from said distiller (DIST2).

18. Solvent washing system according to one of the claims from 11 to 17, **characterized in that** it comprises means suited to regulate the evaporation and condensation pressure.

## Patentansprüche

1. Industrielles Waschverfahren für Artikel, die aus der industriellen Produktion im Allgemeinen stammen, das Lösungsmittel verwendet und die folgenden Schritte umfasst:
- Wäsche der besagten Artikel in mindestens einer vakuumdichten Waschkammer (W), wobei mindestens ein Lösungsmittel verwendet wird;
- Regeneration des besagten Lösungsmittels, das von der besagten Waschkammer (W) kommt, durch einen ersten Destillationsschritt, der in mindestens einer ersten Destillationsvorrichtung (DIST1), und Kondensation in mindestens einem Wärmetauscher (HEAT1) durchgeführt wird;
- Trocknung des besagten Materials in der besagten Vakuumkammer (W);
**dadurch gekennzeichnet, dass**
das besagte mindestens eine Lösungsmittel ein Lösungsmittel ist, das bei Atmosphärendruck bei einer Temperatur zwischen 15 °C und 60 °C siedet, und dass der besagte Regenerationsschritt des besagten Lösungsmittels durch thermische Verdichtung ausgeführt wird, die insbesondere die folgenden Schritte umfasst:
- Absaugung der Dämpfe des besagten Lösungsmittels aus der besagten ersten Destillationsvorrichtung (DIST1) durch eine erste Pumpe (P1), die zwischen der besagten ersten Destillationsvorrichtung (DIST1) und dem besagten Wärmetauscher (HEAT1) angeordnet ist;
- Verdichtung der besagten Dämpfe mit einem höheren Druck als dem Druck, der in der besagten ersten Destillationsvorrichtung (DIST1) vorhanden ist, sodass die Temperatur der besagten verdichteten Dämpfe höher ist als die Siedetemperatur des besagten Lösungsmittels im flüssigen Zustand, das in der besagten ersten Destillationsvorrichtung (DIST1) enthalten ist;
- Einleitung der besagten verdichteten Dämpfe in den besagten mindestens einen Wärmetauscher (HEAT1);
- Einleitung des besagten Lösungsmittels im flüssigen Zustand, das in der besagten ersten Destillationsvorrichtung (DIST1) enthalten ist, in den besagten mindestens einen Wärmetauscher (HEAT1);
- Wärmeaustausch im besagten mindestens einen Wärmetauscher (HEAT1) zwischen den besagten verdichteten Dämpfen und dem besagten Lösungsmittel im flüssigen Zustand, wobei die Kondensationswärmeenergie der besagten Dämpfe auf das besagte flüssige Lösungsmittel übertragen wird;
- Rückführung des besagten flüssigen Lösungsmittels in die besagte erste Destillationsvorrichtung (DIST1),
- sodass die Verdampfung des besagten flüssigen Lösungsmittels in der besagten ersten Destillationsvorrichtung (DIST1) ohne weitere Zufuhr von Wärmeenergie aus einer externen Quelle, sondern nur durch die Kondensationswärmeenergie erfolgt, die von den besagten verdichteten Dämpfen erzeugt wird.

2. Verfahren nach Patentanspruch 1, **dadurch gekennzeichnet, dass** es einen weiteren Vakuumdestillationsschritt umfasst, der dazu ausgelegt ist, die Destillationsrückstände weiter zu konzentrieren, und wobei der besagte Vakuumdestillationsschritt unter Verwendung der besagten ersten Trockenpumpe (P1) durchgeführt wird.

3. Verfahren nach Patentanspruch 1 oder 2, **dadurch gekennzeichnet, dass** der besagte Regenerationsschritt zu einem anderen Zeitpunkt als der besagte Trocknungsschritt und der besagte mögliche Vakuumdestillationsschritt auftritt.

4. Verfahren nach einem der vorhergehenden Patentansprüche, **dadurch gekennzeichnet, dass** der besagte Regenerationsschritt durch thermische Verdichtung unter Verwendung der besagten ersten Trockenpumpe (P1) durchgeführt wird, während die besagten weiteren Vakuumdestillations- und Trocknungsschritte unter Verwendung einer zweiten Trockenpumpe (P4) in Reihe mit der besagten ersten Trockenpumpe (P1) durchgeführt werden, um einen größeren Unterdruck zu erhalten.

5. Verfahren nach einem der vorhergehenden Patentansprüche, **dadurch gekennzeichnet, dass** der Verdampfungsdruck und der Kondensationsdruck im Bereich von -500 mbar bis +500 mbar liegen.

6. Verfahren nach Patentanspruch 5, **dadurch gekennzeichnet, dass** es mit einem leichten Unterdruck des gesamten Systems durchgeführt wird.

7. Verfahren nach Patentanspruch 6, **dadurch gekennzeichnet, dass** es mit einem Atmosphärendrucksystem durchgeführt wird, während der Druck im Vorlauf der besagten ersten Trockenpumpe (P1) und im besagten Wärmetauscher (HEAT1) auf einem höheren Druck als der Atmosphärendruck gehalten wird.

8. Verfahren nach jeglichem der vorhergehenden Patentansprüche, **dadurch gekennzeichnet, dass** es auch den Kondensationsschritt der Dämpfe, die aus der besagten Waschkammer (W) entnommen werden, umfasst, wobei die besagte Kondensation in mindestens einem Kondensator (COND1) in Reihe mit dem besagten Wärmetauscher (HEAT1) stattfindet.

9. Verfahren nach Patentanspruch 8, **dadurch gekennzeichnet, dass** es auch den Schritt der Abscheidung nach Dichte des Wassers und des Lösungsmittels umfasst, die in der Flüssigkeit enthalten sind, die vom besagten mindestens einen Kondensator (COND1) kommt.

10. Lösungsmittelwaschsystem, das konfiguriert ist, um das Verfahren nach jeglichem der vorhergehenden Patentansprüche umzusetzen, **dadurch gekennzeichnet, dass** es Folgendes umfasst:
- mindestens eine vakuumdichte Waschkammer (W), die dazu bestimmt ist, das zu waschende Material zu enthalten;
- mindestens eine erste Destillationsvorrichtung oder Hauptdestillationsvorrichtung (DIST1), in die die Waschflüssigkeiten, die von der besagten Waschkammer (W) kommen, geleitet werden;
- mindestens eine erste Trockenpumpe (P1), die mit der besagten ersten Destillationsvorrichtung (DIST1) verbunden ist und dazu geeignet ist, die Dämpfe aus der besagten ersten Destillationsvorrichtung (DIST1) zu saugen und sie zu mindestens einem Wärmetauscher (HEAT1, HEAT2) zu leiten;
- Mittel zum Einleiten des besagten Lösungsmittels im flüssigen Zustand, das in der besagten ersten Destillationsvorrichtung (DIST1) enthalten ist, in den besagten mindestens einen Wärmetauscher (HEAT1);
- der besagte mindestens eine Wärmetauscher (HEAT1, HEAT2), der dazu geeignet ist, die besagten Dämpfe, die von der besagten ersten Destillationsvorrichtung (DIST1) kommen, zu kondensieren, und zum Wärmeaustausch zwischen den besagten verdichteten Dämpfen und dem besagten Lösungsmittel im flüssigen Zustand geeignet ist, wobei die Kondensationswärmeenergie der besagten Dämpfe auf das besagte flüssige Lösungsmittel übertragen wird;
- Mittel zum Rückführen des besagten flüssigen Lösungsmittels in die besagte erste Destillationsvorrichtung (DIST1);
und wobei die besagte erste Trockenpumpe (P1) selektiv als Verdichter dient, um die besagten Dämpfe so zu verdichten, dass ihre Temperatur innerhalb mindestens eines Wärmetauschers (HEAT1) die Temperatur der Flüssigkeit, die in der besagten ersten Destillationsvorrichtung (DIST1) enthalten ist, übersteigt, oder als Ansaugpumpe, um die Dämpfe während des Trocknungsschritts aus der besagten Waschkammer (W) zu saugen,
und wobei keine externe Quelle weiter Wärmeenergie an die besagte erste Destillationsvorrichtung (DIST1) zuführt, wo die Verdampfung des besagten flüssigen Lösungsmittels nur mit der Kondensationswärmeenergie stattfindet, die durch die besagten verdichteten Dämpfe gewonnen wird.

11. Lösungsmittelwaschsystem nach Patentanspruch 10, **dadurch gekennzeichnet, dass** es auch mindestens eine zweite Pumpe oder Rückführungspumpe (P2) umfasst, die dazu geeignet ist, die Waschflüssigkeit von der besagten ersten Destillationsvorrichtung (DIST1) zum besagten Wärmetauscher (HEAT1) zu leiten, wo sie für den Wärmeaustausch bei der Kondensation der besagten Dämpfe verwendet wird, und dann die besagte Flüssigkeit wieder in die besagte erste Destillationsvorrichtung (DIST1) rückzuführen.

12. Lösungsmittelwaschsystem nach Patentanspruch 10, **dadurch gekennzeichnet, dass** es eine zweite Trockenpumpe oder Flüssigkeitsringpumpe (P4) umfasst, die in Reihe mit der besagten ersten Trockenpumpe (P1) angebracht ist und eine geringere Durchflussrate als die besagte erste Trockenpumpe (P1) aufweist.

13. Lösungsmittelwaschsystem nach Patentanspruch 10, **dadurch gekennzeichnet, dass** sich der besagte Wärmetauscher (HEAT1) außerhalb der besagten ersten Destillationsvorrichtung (DIST1) befindet.

14. Lösungsmittelwaschsystem nach Patentanspruch 10, **dadurch gekennzeichnet, dass** der besagte Wärmetauscher (HEAT2) vom Rohrbündeltyp ist und innerhalb der besagten ersten Destillationsvorrichtung (DIST1) so angebracht ist, dass er in die zu destillierende Flüssigkeit eingetaucht ist.

15. Lösungsmittelwaschsystem nach einem der Patentansprüche 10 bis 14, **dadurch gekennzeichnet, dass** es auch mindestens einen Kondensator (COND1) in Reihe mit dem besagten Wärmetauscher (HEAT1, HEAT2) zur Kondensation der Dämpfe umfasst, die aus der besagten Waschkammer (W) mittels der besagten ersten Trockenpumpe (P1) und eventuell auch mittels der besagten zweiten Trockenpumpe oder Flüssigkeitsringpumpe (P4) entnommen werden.

16. Lösungsmittelwaschsystem nach Patentanspruch 15, **dadurch gekennzeichnet, dass** es mindestens einen Abscheider (SEP1) umfasst, der stromabwärts vom besagten mindestens einen Kondensator (COND1) positioniert ist und dazu bestimmt ist, die Flüssigkeit vom besagten Kondensator (COND1) zu erhalten, und wobei der besagte Abscheider (SEP1) einen Kanal (T) umfasst, der dazu geeignet ist, das durch Schwerkraft vom Wasser abgeschiedene Lösungsmittel zu sammeln und es in mindestens einen Speichertank (ACC), der wiederum hydraulisch mit der besagten Waschkammer (W) verbunden ist, rückzuführen.

17. Lösungsmittelwaschsystem nach einem der Patentansprüche 10 bis 16, **dadurch gekennzeichnet, dass** es mindestens eine zweite Destillationsvorrichtung (DIST2) umfasst, die konfiguriert ist, um eine weitere Vakuumdestillation der Flüssigkeit durchzuführen, die von der besagten ersten Destillationsvorrichtung (DIST1) durch ein Ventil (VP5) bzw. durch eine Förderpumpe, die zwischen der besagten ersten und der besagten zweiten Destillationsvorrichtung (DIST1, DIST2) angebracht ist, kommt,
*und wobei* die besagte zweite Destillationsvorrichtung (DIST2) mindestens eine Wärmequelle (S) umfasst und mittels eines weiteren Ventils (VP3) mindestens mit der besagten ersten Trockenpumpe (P1) verbunden ist,
*und wobei* die besagte Trockenpumpe (P1) auch als Ansaugpumpe dient, um die Dämpfe aus der besagten Destillationsvorrichtung (DIST2) zu saugen.

18. Lösungsmittelwaschsystem nach einem der Patentansprüche 11 bis 17, **dadurch gekennzeichnet, dass** es Mittel umfasst, die dazu geeignet sind, den Verdampfungs- und Kondensationsdruck zu regulieren.

## Revendications

1. Procédé de lavage industriel d'articles issus de la production industrielle en général, utilisant des solvants et comprenant les étapes suivantes :
- lavage desdits articles dans au moins une chambre de lavage étanche au vide (W) utilisant au moins un solvant ;
- régénération dudit solvant provenant de ladite chambre de lavage (W) par une première étape de distillation effectuée dans au moins un premier distillateur (DIST1) et condensation dans au moins un échangeur (HEAT1) ;
- séchage dudit matériau dans ladite chambre à vide (W) ;
**caractérisé en ce que**
ledit au moins un solvant est un solvant qui, à la pression atmosphérique, bout à une température comprise entre 15°C et 60°C, et **en ce que**
ladite étape de régénération dudit solvant est réalisée par compression thermique, qui comprend plus spécifiquement les étapes suivantes :
- aspiration des vapeurs dudit solvant depuis ledit premier distillateur (DIST1) à travers une première pompe (P1) interposée entre ledit premier distillateur (DIST1) et ledit échangeur (HEAT1) ;
- compression desdites vapeurs à une pression plus élevée par rapport à la pression présente dans ledit premier distillateur (DIST1), de sorte que la température desdites vapeurs comprimées soit supérieure à la température d'ébullition dudit solvant à l'état liquide contenu dans ledit premier distillateur (DIST1) ;
- introduction desdites vapeurs comprimées dans ledit au moins un échangeur (HEAT1) ;
- introduction dudit solvant à l'état liquide contenu dans ledit premier distillateur (DIST1) dans ledit au moins un échangeur (HEAT1) ;
- échange de chaleur dans ledit au moins un échangeur (HEAT1) entre lesdites vapeurs comprimées et ledit solvant à l'état liquide, où l'énergie thermique de condensation desdites vapeurs est transmise audit solvant liquide ;
- recirculation dudit solvant liquide dans ledit premier distillateur (DIST1),
- de sorte que l'évaporation dudit solvant liquide dans ledit premier distillateur (DIST1) s'effectue sans apport supplémentaire d'énergie thermique provenant d'une source extérieure, mais uniquement avec l'énergie thermique de condensation produite par lesdites vapeurs comprimées.

2. Procédé selon la revendication 1, **caractérisé en ce qu'**il comprend une étape supplémentaire de distillation sous vide destinée à concentrer davantage les résidus de distillation, et où ladite étape de distillation sous vide est réalisée à l'aide de ladite première pompe à sec (P1).

3. Procédé selon la revendication 1 ou 2, **caractérisé en ce que** ladite étape de régénération a lieu à un moment différent de ladite étape de séchage et de ladite éventuelle étape de distillation sous vide.

4. Procédé selon l'une des revendications précédentes, **caractérisé en ce que** ladite étape de régénération par thermocompression est réalisée à l'aide de ladite première pompe à sec (P1), tandis que lesdites étapes ultérieures de distillation et de séchage sous vide sont réalisées à l'aide d'une deuxième pompe à sec (P4) en série avec ladite première pompe à sec (P1) afin d'obtenir une pression négative plus importante.

5. Procédé selon l'une des revendications précédentes, **caractérisé en ce que** la pression d'évaporation et la pression de condensation sont comprises entre -500 mbar et +500 mbar.

6. Procédé selon la revendication 5, **caractérisé en ce qu'**il est réalisé avec l'ensemble du système à une pression légèrement négative.

7. Procédé selon la revendication 6, **caractérisé en ce qu'**il est réalisé avec un système à pression atmosphérique, alors que la pression dans le refoulement de ladite première pompe à sec (P1) et dans ledit échangeur (HEAT1) est maintenue à une pression supérieure à la pression atmosphérique.

8. Procédé selon l'une quelconque des revendications précédentes, **caractérisé en ce qu'**il comprend également l'étape de condensation des vapeurs extraites de ladite chambre de lavage (W), où ladite condensation a lieu dans au moins un condenseur (COND1) en série avec ledit échangeur (HEAT1).

9. Procédé selon la revendication 8, **caractérisé en ce qu'**il comprend également l'étape de séparation par densité de l'eau et du solvant qui sont contenus dans le liquide provenant dudit au moins un condenseur (COND1).

10. Système de lavage au solvant configuré pour mettre en oeuvre le procédé selon l'une quelconque des revendications précédentes, **caractérisé en ce qu'**il comprend :
- au moins une chambre de lavage étanche au vide (W) destinée à contenir le matériel à laver ;
- au moins un premier distillateur ou distillateur principal (DIST1), dans lequel sont acheminés les liquides de lavage provenant de ladite chambre de lavage (W) ;
- au moins une première pompe à sec (P1) reliée audit premier distillateur (DIST1) et apte à aspirer les vapeurs dudit premier distillateur (DIST1) et à les acheminer vers au moins un échangeur (HEAT1, HEAT2) ;
- des moyens pour introduire ledit solvant à l'état liquide contenu dans ledit premier distillateur (DIST1) dans ledit au moins un échangeur (HEAT1) ;
- ledit au moins un échangeur (HEAT1, HEAT2) apte à condenser lesdites vapeurs provenant dudit premier distillateur (DIST1) et apte à l'échange de chaleur entre lesdites vapeurs comprimées et ledit solvant à l'état liquide, où l'énergie thermique de condensation desdites vapeurs est transmise audit solvant liquide ;
- des moyens de recirculation dudit solvant liquide dans ledit premier distillateur (DIST1) ;
et où ladite première pompe à sec (P1) sert sélectivement de compresseur pour comprimer lesdites vapeurs de manière à ce que leur température à l'intérieur d'au moins un échangeur (HEAT1) dépasse la température du liquide contenu dans ledit premier distillateur (DIST1) ou de pompe d'aspiration pour aspirer les vapeurs de ladite chambre de lavage (W) au cours de l'étape de séchage,
et où aucune source externe ne fournit d'énergie thermique audit premier distillateur (DIST1), où l'évaporation dudit solvant liquide s'effectue uniquement avec l'énergie thermique de condensation produite par lesdites vapeurs comprimées.

11. Système de lavage au solvant selon la revendication 10, **caractérisé en ce qu'**il comprend également au moins une deuxième pompe ou pompe de recirculation (P2) apte à acheminer le liquide de lavage dudit premier distillateur (DIST1) vers ledit échangeur (HEAT1), où il est utilisé pour l'échange de chaleur dans la condensation desdites vapeurs et ensuite pour recirculer ledit liquide dans ledit premier distillateur (DIST1) à nouveau.

12. Système de lavage au solvant selon la revendication 10, **caractérisé en ce qu'**il comprend une seconde pompe à sec ou pompe à anneau liquide (P4) montée en série avec ladite première pompe à sec (P1) et présentant un débit inférieur à celui de ladite première pompe à sec (P1).

13. Système de lavage au solvant selon la revendication 10, **caractérisé en ce que** ledit échangeur (HEAT1) est externe audit premier distillateur (DIST1).

14. Système de lavage au solvant selon la revendication 10, **caractérisé en ce que** ledit échangeur (HEAT2) est du type à faisceau tubulaire et est monté à l'intérieur dudit premier distillateur (DIST1) de manière à être immergé dans le liquide à distiller.

15. Système de lavage au solvant selon l'une des revendications de 10 à 14, **caractérisé en ce qu'**il comprend également au moins un condenseur (COND1) en série avec ledit échangeur (HEAT1, HEAT2) pour la condensation des vapeurs extraites de ladite chambre de lavage (W) au moyen de ladite première pompe à sec (P1) et éventuellement au moyen de ladite deuxième pompe à sec ou pompe à anneau liquide (P4).

16. Système de lavage au solvant selon la revendication 15, **caractérisé en ce qu'**il comprend au moins un séparateur (SEP1) positionné en aval dudit au moins un condenseur (COND1) et destiné à recevoir le liquide dudit condenseur (COND1), et où ledit séparateur (SEP1) comprend un conduit (T) apte à collecter le solvant séparé de l'eau par gravité et à le faire recirculer dans au moins un réservoir de stockage (ACC) qui est à son tour relié hydrauliquement à ladite chambre de lavage (W).

17. Système de lavage au solvant selon l'une des revendications de 10 à 16, **caractérisé en ce qu'**il comprend au moins un deuxième distillateur (DIST2) configuré pour effectuer une distillation sous vide supplémentaire du liquide provenant dudit premier distillateur (DIST1) par l'intermédiaire d'une vanne (VP5) et/ou d'une pompe de transfert montée entre ledit premier et ledit deuxième distillateur (DIST1, DIST2),
*et où* ledit deuxième distillateur (DIST2) comprend au moins une source de chaleur (S) et est connecté au moins à ladite première pompe à sec (P1) au moyen d'une autre vanne (VP3),
*et où* ladite pompe à sec (P1) sert également de pompe d'aspiration pour aspirer les vapeurs dudit distillateur (DIST2).

18. Système de lavage au solvant selon l'une des revendications de 11 à 17, **caractérisé en ce qu'**il comprend des moyens aptes à réguler la pression d'évaporation et de condensation.
